# EUROPÄISCHE PATENTANMELDUNG

(11) **EP 4 455 052 A1**
(43) Veröffentlichungstag der Anmeldung: **30.10.2024**
(21) Anmeldenummer: 23169391.2
(22) Anmeldetag: 24.04.2023
(51) Int. Cl.: B65G 1/04

(54) **SCHNITTSTELLENEINHEIT ZUR AUFNAHME UNTERSCHIEDLICHER LASTTRÄGER AUF EINEM UNTERFAHR-SHUTTLE**

(71) Anmelder: Jungheinrich Aktiengesellschaft, 22047 Hamburg (DE)
(72) Erfinder: ZEILHOFER, Florian, 80333 München (DE); OBERASCHER, Sandrik, 81925 München (DE); SCHÖPP, Martin, 86415 Mering (DE); FERLINZ, Linus, 81541 München (DE)
(74) Vertreter: Weickmann & Weickmann PartmbB

(57) **Zusammenfassung**

Die vorliegende Erfindung betrifft eine Schnittstelleneinheit (10) zur Aufnahme unterschiedlicher Lastträger (P1, P2), insbesondere Paletten und Gitterboxen, auf einem Unterfahr-Shuttle mit einer Längsachse (L) und einer Breitenachse (B), umfassend eine im Wesentlichen ebene Aufstandsfläche (12) zum Aufstellen eines Lastträgers (P1, P2), wenigstens eine erste Sensoreinheit (14) zur Erfassung einer Anwesenheit des Lastträgers (P1, P2), wobei die wenigstens eine erste Sensoreinheit (14) mit einem aus der Aufstandsfläche (12) vorstehenden Anschlagelement (16) integriert ist, welches dazu eingerichtet ist, eine Verlagerung des Lastträgers (P1, P2) auf der Aufstandsfläche (12) zu begrenzen, wobei das wenigstens eine Anschlagelement (16) und damit die entsprechende erste Sensoreinheit (14) an wenigstens zwei Anbringungspositionen (16a) an der Aufstandsfläche (12) anbringbar ist; und wenigstens eine zweite Sensoreinheit (22) zur Erfassung einer korrekten Aufnahme und Positionierung des Lastträgers (P1, P2), wobei in der Aufstandsfläche (12) eine Mehrzahl von Ausnehmungen (20) vorgesehen sind, wobei die wenigstens eine zweite Sensoreinheit (22) bezüglich der Aufstandsfläche (12) derart in wenigstens zwei Konfigurationen betreibbar ist, dass ihre Erfassung des Lastträgers (P1, P2) durch eine der Mehrzahl von Ausnehmungen (20) erfolgt.

## Beschreibung

Die vorliegende Erfindung betrifft eine Schnittstelleneinheit zur Aufnahme unterschiedlicher Lastträger, insbesondere Paletten und Gitterboxen unterschiedlicher Dimensionen, auf einem Unterfahr-Shuttle mit einer Längs- und einer Breitenachse, sowie ein Unterfahr-Shuttle, umfassend eine an seiner Oberseite angebrachte derartige Schnittstelleneinheit.

Im Rahmen der zunehmenden Automatisierung von Logistikeinrichtungen haben in jüngerer Zeit sogenannte Unterfahr-Shuttle sukzessive an Bedeutung gewonnen, die autonom oder halbautonom auf ihrer Oberseite Lasten transportieren können, wie beispielsweise unterschiedliche Typen von Paletten oder Gitterboxen mit darauf beziehungsweise darin getragenen Waren. Zur Aufnahme derartiger Lasten werden diese in einer Übergabestation von einem Unterfahr-Shuttle unterfahren und die entsprechende Ladefläche an der Oberseite des Unterfahr-Shuttles wird angehoben, bis die Last von der Übergabestation abgehoben ist und auf dem Unterfahr-Shuttle getragen ist, woraufhin sie an einen vorgesehenen Ort transportiert und dort erneut übergeben werden kann. Zu diesem Zweck sind derartige Unterfahr-Shuttle in der Regel zu einer omnidirektionalen Fortbewegung eingerichtet und werden über ein Leitsystem hinsichtlich ihres Betriebs koordiniert und angesteuert. Da die von solchen Unterfahr-Shuttles zu transportierenden Lasten erheblich sein können und teilweise eine Tonne an Gewicht überschreiten, ist es unerlässlich, sicherzustellen, dass sie auf der Oberseite solcher Unterfahr-Shuttle zuverlässig getragen und gegen ein Verrutschen und/oder Kippen gesichert sind, da die Gefahr von Unfällen aufgrund verrutschender Ladungen oder falscher Platzierungen davon erheblich und eine Bergung einer solchen abgerutschten Last überaus aufwendig ist.

Aus diesen Gründen kann es ferner notwendig sein, eine Sensorik zur Erfassung eines Vorliegens einer Last beziehungsweise eines Lastträgers an einer an der Oberseite eines Unterfahr-Shuttles angebrachten Schnittstelleneinheit vorzusehen, um einerseits das Vorliegen und andererseits eine korrekte Aufnahme beziehungsweise Positionierung oder Ausrichtung eines entsprechenden Lastträgers zu erfassen.

Hierbei ist es zwar aus dem Stand der Technik bekannt, individuelle Schnittstelleneinheiten für einen Transport entsprechender Lastträger, also insbesondere von unterschiedlichen Typen von Paletten oder Gitterboxen, an der Oberseite von Unterfahr-Shuttles vorzusehen, es werden hierfür üblicherweise jedoch für unterschiedliche Lastträger auch unterschiedliche Schnittstelleneinheiten benötigt, da die Formen und Abmessungen der Schnittstelleneinheiten auf die entsprechenden Lastträger zugeschnitten sind.

Hierdurch ist jedoch die Flexibilität von mit derartigen Schnittstelleneinheiten ausgerüsteten Unterfahr-Shuttles verringert und es kann beispielsweise bei einem Wechsel zwischen zwei unterschiedlichen Typen von Lastträgern während eines Betriebs für ein derartiges Unterfahr-Shuttle notwendig sein, die entsprechende Schnittstelleneinheit zunächst einmal von der Oberseite des Unterfahr-Shuttles abzumontieren, um anschließend eine andere, auf den neuen Typ von Lastträger abgestimmte Schnittstelleneinheit erneut montieren zu können. Diese Individualisierung einzelner Schnittstelleneinheiten und ihr Zuschnitt auf konkrete Typen von Lastträgern schlägt sich auch in der jeweiligen Positionierung der oben angesprochenen Sensoreinheiten zur Erfassung eines Vorliegens und einer Ausrichtung der Lastträger auf den Schnittstelleneinheiten nieder, da diese ebenfalls individuell auf die einzelnen Typen von Lastträgern angepasst sein müssen, die jeweils aufgrund unterschiedlicher geometrischer Eigenschaften unterschiedliche Sensierungspunkte erfordern.

Es ist dementsprechend die Aufgabe der vorliegenden Erfindung, eine gattungsgemäße Schnittstelleneinheit bereitzustellen, welche einerseits zur Erhöhung der Flexibilität des damit ausgerüsteten Unterfahr-Shuttles in der Lage ist, unterschiedliche Typen von Lastträgern zu tragen, und die andererseits jedoch mit einer derartigen Sensorik ausgestattet ist, dass sämtliche aufnehmbare Typen von Lastträgern hinsichtlich ihrer Anwesenheit und ihrer korrekten Aufnahme und Positionierung zuverlässig erfassbar sind.

Zu diesem Zweck und zur Lösung der oben genannten Aufgabe umfasst eine erfindungsgemäße Schnittstelleneinheit zur Aufnahme unterschiedlicher Lastträger, insbesondere Paletten und Gitterboxen unterschiedlicher Dimensionen, auf einem Unterfahr-Shuttle mit einer Längs- und einer Breitenrichtung eine im Wesentlichen ebene Aufstandsfläche zum Aufstellen eines Lastträgers, wenigstens eine an einer Anbringungsposition vorgesehene erste Sensoreinheit zur Erfassung einer Anwesenheit des Lastträgers, sowie wenigstens eine an einer zweiten Anbringungsposition vorgesehene zweite Sensoreinheit zur Erfassung einer korrekten Aufnahme und Positionierung des Lastträgers.

Dementsprechend wird durch das Vorsehen der ebenen Aufstandsfläche die Möglichkeit geschaffen, unterschiedliche Typen von Lastträgern und insbesondere Paletten und Gitterboxen auf die entsprechende Schnittstelleneinheit aufzustellen, wobei dementsprechend lediglich ein Umrüsten oder Umkonfigurieren der wenigstens einen ersten und/oder wenigstens einen zweiten Sensoreinheit notwendig sein kann, um diese hinsichtlich ihrer jeweiligen Montage- und/oder Erfassungspositionen an entsprechende Typen von Lastträgern anzupassen, ohne dass hierzu eine Ersetzung der gesamten Schnittstelleneinheit an dem Unterfahr-Shuttle notwendig werden würde.

Hierbei sollte die Schnittstelleneinheit derart bemessen werden, dass der größte von ihr aufzunehmende Lastträger noch transportiert werden kann, wodurch sich automatisch genug Aufstandsfläche für entsprechende kleinere Lastträger ergibt. Insbesondere kann ferner je nach Abmessungen der entsprechenden Typen von Lastträgern und Anordnungen der Montagepunkte der Sensoreinheiten ein Quer- oder auch Längstransport der entsprechenden Lastträger auf dem Unterfahr-Shuttle vorgesehen werden. Hierbei ist es selbstverständlich möglich, jeweils mehrere erste und/oder zweite Sensoreinheiten vorzusehen, um unterschiedliche Breiten von aufzunehmenden Lastträgern alternativ bestimmen zu können, wobei als entsprechende Lastträger insbesondere verschiedene Typen von Europaletten oder anderen genormten Paletten sowie Gitterboxen nach DIN 15155 vorgesehen sein können.

In einer Ausführungsform einer erfindungsgemäßen Schnittstelleneinheit kann die erste Sensoreinheit an zumindest zwei ersten Anbringungspositionen befestigbar sein und/oder die zweite Sensoreinheit an wenigstens zwei zweiten Anbringungspositionen befestigbar sein, wobei insbesondere zwei zweite Sensoreinheiten vorgesehen sein können, die jeweils an zwei zweiten Anbringungspositionen befestigbar sind. Hierdurch wird eine verbesserte Anpassbarkeit der Schnittstelleneinheit an unterschiedliche Lastträger-Dimensionen erreicht und ihre jeweilige korrekte Erfassung sichergestellt.

Erfindungsgemäß kann die wenigstens eine erste Sensoreinheit mit einem aus der Aufstandsfläche vorstehenden Anschlagelement integriert sein, welches dazu eingerichtet ist, eine Verlagerung des Lastträgers auf der Aufstandsfläche zu begrenzen, wobei das wenigstens eine Anschlagelement und damit die erste Sensoreinheit an wenigstens zwei Anbringungspositionen an der Aufstandsfläche anbringbar ist.

Alternativ oder zusätzlich können in der Aufstandsfläche eine Mehrzahl von Ausnehmungen vorgesehen sein, wobei die wenigstens eine zweite Sensoreinheit bezüglich der Aufstandsfläche derart in wenigstens zwei Konfigurationen betreibbar ist, dass ihr Erfassung des Lastträgers durch eine der Mehrzahl von Ausnehmungen erfolgt. Hierbei können die wenigstens zwei Konfigurationen der zweiten Sensoreinheit insbesondere dazu geeignet sein, eine Erfassung einer korrekten Aufnahme von Lastträgern unterschiedlicher Dimensionen zu ermöglichen.

In diesem Zusammenhang soll ferner ebenfalls erwähnt werden, dass hinsichtlich der Ausgestaltung der wenigstens einen zweiten Sensoreinheit unterschiedliche Ansätze verfolgt werden können. Beispielsweise könnte jeder der Mehrzahl von Ausnehmungen eine eigene zweite Sensoreinheit zugeordnet sein, wobei je nach zu transportierendem Lastträger lediglich durch eine bestimmte oder wenige aus diesen mehreren zweiten Sensoreinheiten dann eine Erfassung durchgeführt werden könnte. Alternativ könnte auch bei einem Wechsel zwischen unterschiedlichen Lastträgern eine Umpositionierung der wenigstens einen zweiten Sensoreinheit stattfinden, so dass diese nunmehr ihre Erfassung durch eine geeignete der Ausnehmungen hindurch vornehmen könnte. Zudem wäre es denkbar, eine einzelne zweite Sensoreinheit derart auszugestalten, dass sie in unterschiedlichen Konfigurationen betreibbar ist, also insbesondere je nach Konfiguration durch unterschiedliche der Ausnehmungen hindurch ihre Erfassung durchführen könnte. Dies könnte beispielsweise mittels geeigneter schaltbarer optischer Elemente im Falle einer Lichtschranke erreicht werden. Wenngleich in diesen Ausführungsformen jeweils ein gewisser Montage- und/oder Konstruktionsaufwand nötig ist, so ist dieser in jedem Fall immer noch geringer als ein vollständiger Tausch der gesamten Schnittstelleneinheit bei einem Übergang auf einen anderen Typ von Lastträger während eines Betriebs des entsprechenden Fahrzeugs.

In jedem Fall können die Mehrzahl von Ausnehmungen in Verbindung mit der wenigstens einen zweiten Sensoreinheit als Schlitze ausgebildet sein, insbesondere als parallel zueinander verlaufende Schlitze, welche dann hinsichtlich ihrer relativen Positionierung an der Aufstandsfläche auf die unterschiedlichen Typen von zu transportierenden Lastträgern abgestimmt sein können, insbesondere auf die jeweilige Breite der Lastträger oder des Abstands von an ihnen zu erfassenden Elementen im Falle eines Quertransports davon.

Weiterhin kann die wenigstens eine zweite Sensoreinheit derart angeordnet sein, dass sich ihr Erfassungsbereich schräg nach oben erstreckt, was insbesondere in der angesprochenen Ausführungsform mit schlitzförmigen Ausnehmungen hinsichtlich einer ausreichenden Montagetoleranz einfach zu realisieren ist. Eine derartige Anordnung ist insbesondere bei einem Transport von Plastikpaletten mit offener Wabenstruktur vorteilhaft, da in einem solchen Fall bei einer vertikalen Anordnung keine zuverlässige Erkennung garantiert werden könnte. Weiterhin verhindert ein schräges Anordnen der wenigstens einen zweiten Sensoreinheit ein leichtes Verschmutzen davon.

Ferner kann zur Herstellung einer Redundanz die erfindungsgemäße Schnittstelleneinheit wenigstens zwei zweite Sensoreinheiten und wenigstens zwei Gruppen von Ausnehmungen umfassen, wobei jeder der Gruppen wenigstens eine der zweiten Sensoreinheiten zugeordnet ist und die Gruppen vorzugsweise symmetrisch bezüglich der Längs- und/oder Breitenachse der Schnittstelleneinheit oder eines Mittelpunkts der Aufstandsfläche angeordnet sind. Auf diese Weise kann eine Erfassung einer korrekten Aufnahme und Positionierung des Lastträgers an einander gegenüberliegenden Positionen vorgenommen werden, wodurch die Erfassung zuverlässiger stattfinden wird. Auch kann auf diese Weise nicht nur das Vorhandensein eines Objekts, beispielsweise eines Palettenbretts an einer bestimmten Position, sondern das Vorliegen zweier Objekte, beispielsweise Palettenbretter in einem definierten Abstand der zweiten Sensoreinheiten, erfasst werden, wobei dieser Abstand charakteristisch für einen bestimmten Lastträger-Typ sein kann.

Alternativ oder zusätzlich kann die erfindungsgemäße Schnittstelleneinheit des Weiteren wenigstens zwei erste Sensoreinheiten und wenigstens zwei Gruppen von Anbringungspositionen umfassen, wobei die Gruppen von Anbringungspositionen vorzugsweise symmetrisch bezüglich der Längs- oder Breitenachse der Schnittstelleneinheit oder eines Mittelpunkts der Aufstandsfläche angeordnet sind. Auch durch diese Maßnahme kann die Anwesenheit des Lastträgers mit einer erhöhten Zuverlässigkeit sicher festgestellt werden.

Insbesondere können in erfindungsgemäßen Schnittstelleneinheiten die Anbringungspositionen als Anschraubpunkte ausgeführt sein, welche ein Einschrauben der Anschlagselemente ermöglichen. Hierbei kann beispielsweise an Gewindelöchern mit einem Innengewinde gedacht werden, welche entsprechend ein Einschrauben von mit einem Außengewinde versehenen Anschlagselementen ermöglichen, in welchen die entsprechenden ersten Sensoreinheiten entsprechend integriert sind.

Hierbei kann insbesondere daran gedacht werden, die wenigstens eine erste Sensoreinheit und/oder die wenigstens eine zweite Sensoreinheit als Abstandssensor oder Lichtschranke auszuführen, welche jeweils in einfacher und sicherer Weise das Vorliegen sowie die entsprechende korrekte Aufnahme und Positionierung des Lastträgers erfassen können.

Um zusätzlich zu den Anschlagselementen eine weitere Maßnahme zum Verhindern eines Verrutschens von auf der Schnittstelleneinheit aufgenommenen Lastträgern bereitzustellen, kann die Aufstandsfläche an ihrer Oberseite mit einem Belag zur Erhöhung der Reibung versehen sein, insbesondere einem Grip-Tape. Hierdurch kann gerade bei Beschleunigungs- oder Abbremsvorgängen sowie Kurvenfahrten ein Verrutschen der Ladung auch bereits dann verhindert werden, wenn noch kein Anliegen des entsprechenden Lastträgers an den Anschlagselementen vorliegt.

Alternativ oder zusätzlich kann die erfindungsgemäße Schnittstelleneinheit ferner wenigstens ein weiteres Anschlagselement umfassen, welchem keine Sensoreinheit zugeordnet ist, sodass das entsprechende Anschlagselement lediglich zur Sicherung der Ladung an der Oberseite der Schnittstelleneinheit in ihrer vorgesehenen Position dient. In jedem Fall können die entsprechenden Anbringungspositionen hierbei derart an der Aufstandsfläche positioniert werden, dass für jeden Typ von zu transportierendem Lastträger jeweils eine Positionierung der Anschlagselemente und ggf. weiteren Anschlagselemente ermöglicht ist, welche einen Spielraum für eine Bewegung davon von beispielsweise 25 mm oder weniger belässt.

Gemäß einem weiteren Aspekt betrifft die vorliegende Erfindung ein Unterfahr-Shuttle, umfassend eine an seiner Oberseite angebrachte Schnittstelleneinheit der eben beschriebenen Art, wobei eine zentrale Steuereinheit des Unterfahr-Shuttles mit den ersten und zweiten Sensoreinheiten der Schnittstelleneinheit betriebsmäßig gekoppelt sein kann.

Sollte dementsprechend eine der Sensoreinheiten feststellen, dass wider Erwarten kein Lastträger an der Oberseite der Schnittstelleneinheit vorliegt und erfasst wird oder ein entsprechender Lastträger nicht korrekt aufgenommen und/oder positioniert ist, so könnte die entsprechende zentrale Steuereinheit des Unterfahr-Shuttles beispielsweise eine Warnung an ein Leitsystem oder einen menschlichen Bediener ausgeben oder das Unterfahr-Shuttle sogar unmittelbar stilllegen, um Unfälle oder ähnliches von vorn herein ausschließen zu können.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine erfindungsgemäße Schnittstelleneinheit in einer isometrischen Ansicht;
- Figur 2: die Schnittstelleneinheit aus Figur 1 in einer schematischen Draufsicht beim Tragen des ersten Typs von Lastträger; und
- Figur 3: eine Ansicht analog zu Figur 2 beim Tragen eines zweiten Typs von Lastträger.

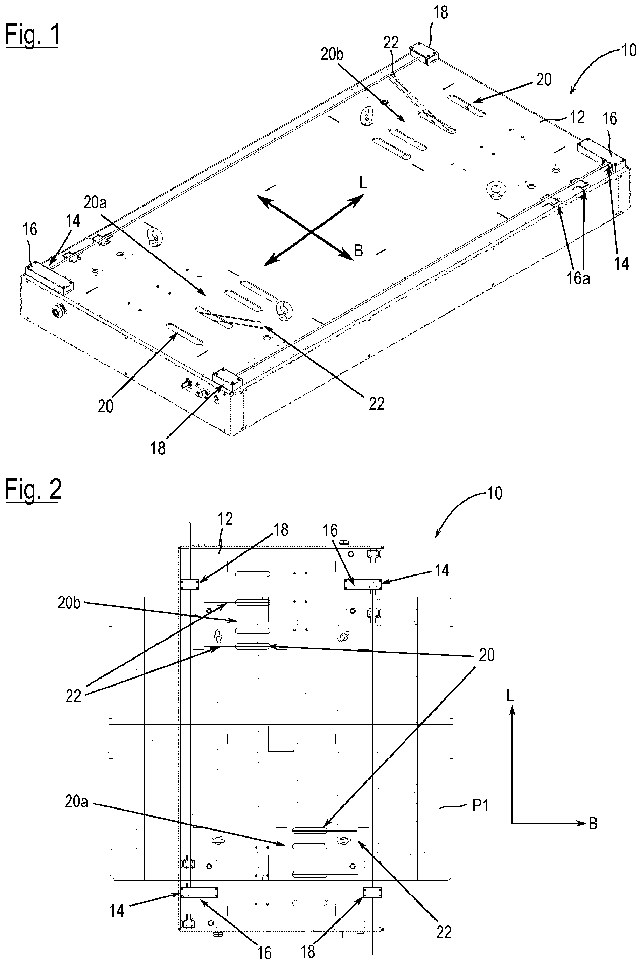

In Figur 1 ist zunächst in einer isometrischen Ansicht eine erfindungsgemäße Schnittstelleneinheit zur Aufnahme von Lastträgern auf einem Unterfahr-Shuttle gezeigt und ganz allgemein mit dem Bezugszeichen 10 bezeichnet. Die Schnittstelleneinheit 10 weist hierbei eine Längsrichtung L und eine Breitenrichtung B auf, wobei die Längsrichtung L der Hauptfahrrichtung des in der Figur nicht weiter dargestellten Unterfahr-Shuttles entspricht, an dessen Oberseite die Schnittstelleneinheit mittels ebenfalls nicht gezeigter Anbringungsabschnitte montierbar ist.

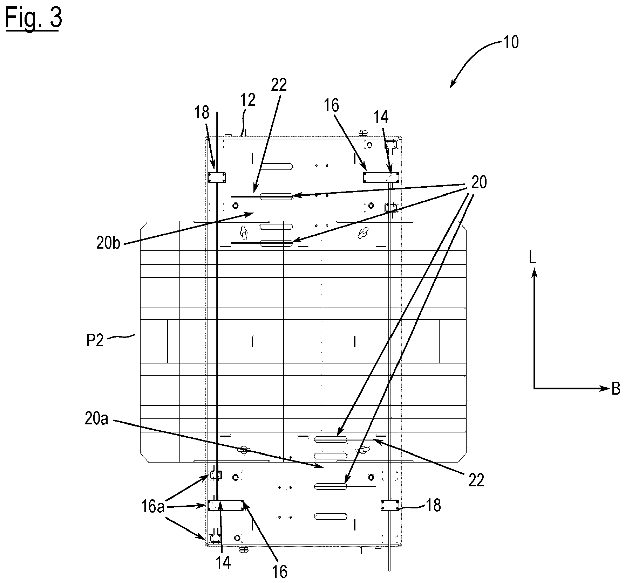

Hierbei umfasst die Schnittstelleneinheit 10 ferner an ihrer Oberseite eine im Wesentlichen ebene Aufstandsfläche 12 zum Aufstellen von verschiedenen Typen von Lastträgern, wie im Folgenden unter Bezugnahme auf die Figuren 2 und 3 noch erläutert werden wird.

Weiterhin sind einander in Breitenrichtung B und Längsrichtung L schräg gegenüberliegend zwei erste Sensoreinheiten 14 zur Erfassung einer Anwesenheit eines Lastträgers vorgesehen, welche in der hier gezeigten Ausführungsform als Lichtschranken oder Abstandssensoren ausgeführt werden können, wobei sich der entsprechende Erfassungsbereich im Wesentlichen parallel zur der Oberseite der Aufstandsfläche 12 erstreckt, so dass ein auf der Aufstandsfläche 12 aufstehender Lastträger sicher erfasst werden wird.

Die ersten Sensoreinheiten 14 sind hierbei in Anschlagselemente 16 integriert, welche an verschiedenen Anbringungspositionen 16a an der Oberseite der ebenen Aufstandsfläche 12 anbringbar sind und welche ferner in einem Zustand, in welchem ein Lastträger auf der Aufstandsfläche 12 aufsteht, eine Anlage für diesen in Längsrichtung L bilden, um ein Verrutschen davon verhindern zu können. Ferner sind in der hier gezeigten Ausführungsform noch zwei weitere Anschlagselemente 18 gezeigt, welchen jeweils kein erster Sensor zugeordnet ist, welche jedoch ebenfalls eine Anlage für einen entsprechenden Lastträger bei einem Verrutschen bilden können und somit zusammen mit den beiden Anschlagselementen 16 in ihrer Anordnung in jeweiligen Ecken der Aufstandsfläche 12 einen Aufnahmebereich für den entsprechenden Lastträger definieren. Ferner können bei einer Ausgestaltung der ersten Sensoreinheiten 14 als Lichtschranken zugehörige Reflektoren in den weiteren Anschlagelementen 18 integriert sein.

Des Weiteren sind in der Aufstandsfläche 12 zwei im Wesentlichen gleichartig aufgebaute Mehrzahlen von Ausnehmungen 20a und 20b vorgesehen, welche jeweils durch in Breitenrichtung B der Aufstandsfläche 12 verlaufende Schlitze 20 ausgeführt sind. Hierbei sind die entsprechenden Schlitze 20 der beiden Gruppen 20a und 20b derart in der Oberseite der Aufstandsfläche 12 angeordnet, dass durch sie hindurch jeweilige zweiten Sensoreinheiten 22 eine korrekte Aufnahme und Positionierung von unterschiedlichen Typen von Lastträgern erfassen können. Da zu diesem Zweck die zweiten Sensoreinheiten 22 unterhalb der Oberseite der Aufstandsfläche 12 angeordnet sind, sind mit dem Bezugszeichen 22 in Figur 1 lediglich die Erfassungsbereiche der entsprechenden Sensoreinheiten bezeichnet.

In den Figuren 2 und 3 ist nun zu erkennen, wie zwei unterschiedliche Typen von Lastträgern auf der Schnittstelleneinheit 10 aufgenommen sein können, welche jeweils in Breitenrichtung B des Lastträgers aufgestellt sind. Hierbei zeigt die Figur 2 die Aufnahme einer breiteren Palette P1, beispielsweise einer Europalette Typ 2, während in Figur 3 eine schmalere Palette P2 dargestellt ist, beispielsweise eine Europalette vom Typ 1.

Indem nun die oben bereits beschriebenen ersten Sensoreinheiten 14 jeweils einen Sensorbereich überdecken, welcher sich im Wesentlichen in Längsrichtung L entlang der beiden sich in Breitenrichtung B gegenüberliegenden Ränder parallel zu der Oberseite der Aufstandsfläche 12 erstreckt, kann in beiden Fällen aus den Figuren 2 und 3 mit einer gleichen Konfiguration eine Erfassung einer Anwesenheit des entsprechenden Lastträgers P1 beziehungsweise P2 festgestellt werden. Hierbei sei ferner darauf hingewiesen, dass durch das Vorsehen der mehreren Anbringungspositionen 16a an der Oberseite der Aufstandsfläche 12 eine weitere Anpassung auf unterschiedlich breite Lastträger stattfinden könnte, um den Bewegungsspielraum des entsprechenden Lastträgers weiter zu begrenzen, beispielsweise auf maximal 25 mm. Ähnliches gilt für die weiteren Anschlagselemente 18, die selbst keine Sensoreinheit umfassen, jedoch in ähnlicher Weise wie die mit einem ersten Sensor ausgerüsteten Anschlagselemente 16 einen Bereich eines möglichen Verrutschens des entsprechenden Lastträgers einschränken und zudem in der oben bereits erwähnten Weise Reflektoren umfassen können, sofern die ersten Sensoren 14 in den gegenüberliegenden Anschlagselementen 16 als Lichtschranken ausgeführt sind.

Weiterhin ist in den Figuren 2 und 3 zu erkennen, dass durch ein entsprechendes Vorsehen von zweiten Sensoreinheiten 22 an jeweils zwei Positionen jeder der beiden Gruppen 20a und 20b von Ausnehmungen in der Oberseite der Aufstandsfläche 12 auch beide Typen von Lastträgern P1 und P2 hinsichtlich ihrer korrekten Aufnahme und Positionierung jeweils zuverlässig erfasst werden können, da in den entsprechenden Erfassungsbereichen jeweils Teile der Lastträger P1 und P2 vorliegen. Dementsprechend wird durch eine auf die unterschiedlichen zu transportierenden Lastträger P1 und P2 angepasste Positionierung der Ausnehmungen 20 erreicht, dass mit der in den Figuren 1 bis 3 gezeigten Konfiguration einer erfindungsgemäßen Schnittstelleneinheit 10 der alternative Transport der beiden Typen von Lastträgern P1 und P2 ohne Modifikation der Schnittstelleneinheit 10 oder Umbau des entsprechenden Unterfahr-Shuttles ermöglicht ist und lediglich eine entsprechende Anpassung der Sensoreinheiten 14 und 22 notwendig sein kann.

Weiterhin sei darauf hingewiesen, dass durch die Auswertung zweier zweiter Sensoreinheiten neben der Redundanz auch auf die Dimension des aufgenommenen Lastträgers geschlossen werden kann, so dass die in den Figuren 2 und 3 aufgenommenen Lastträger unterschiedlicher Dimension unterscheidbar werden. Dem hingegen wäre eine solche Unterscheidung bei Auswertung einer einzelnen zweiten Sensoreinheit deutlich schwieriger und schwer von Situationen abgrenzbar, in denen ein bloßes Verrutschen zu einer vergleichbaren Erfassungssituation der zweiten Sensoreinheiten führen könnte. So könnte ein Verrutschen der Palette P2 in Richtung L in Fig.3 ebenfalls zu einer Detektion im Bereich der am weitersten oben in der Figur dargestellten Sensoreinheit 22 führen, so dass nur durch Auswerten dieser Sensoreinheit die Paletten P1 und P2 nicht ohne Weiteres unterscheidbar wären.

## Patentansprüche

1. Schnittstelleneinheit (10) zur Aufnahme unterschiedlicher Lastträger (P1, P2), insbesondere Paletten und Gitterboxen unterschiedlicher Dimensionen, auf einem Unterfahr-Shuttle mit einer Längsachse (L) und einer Breitenachse (B), umfassend:
- eine im Wesentlichen ebene Aufstandsfläche (12) zum Aufstellen eines Lastträgers (P1, P2);
- wenigstens eine an einer ersten Anbringungsposition vorgesehene erste Sensoreinheit (14) zur Erfassung einer Anwesenheit des Lastträgers (P1, P2), und
- wenigstens eine an einer zweiten Anbringungsposition vorgesehene zweite Sensoreinheit (22) zur Erfassung einer korrekten Aufnahme und Positionierung des Lastträgers (P1, P2).

2. Schnittstelleneinheit (10) nach Anspruch 1,
wobei die erste Sensoreinheit (14) an zumindest zwei ersten Anbringungspositionen befestigbar ist und/oder die zweite Sensoreinheit (22) an wenigstens zwei zweiten Anbringungspositionen befestigbar ist, insbesondere zwei zweite Sensoreinheiten (22) vorgesehen sind, die jeweils an zwei zweiten Anbringungspositionen befestigbar sind.

3. Schnittstelleneinheit (10) nach Anspruch 1 oder 2,
wobei die wenigstens eine erste Sensoreinheit (14) mit einem aus der Aufstandsfläche (12) vorstehenden Anschlagelement (16) integriert ist, welches dazu eingerichtet ist, eine Verlagerung des Lastträgers (P1, P2) auf der Aufstandsfläche (12) zu begrenzen, wobei das wenigstens eine Anschlagelement (16) und damit die entsprechende erste Sensoreinheit (14) an wenigstens zwei ersten Anbringungspositionen (16a) an der Aufstandsfläche (12) anbringbar ist.

4. Schnittstelleneinheit (10) nach einem der Ansprüche 1 bis 3
wobei in der Aufstandsfläche (12) eine Mehrzahl von Ausnehmungen (20) vorgesehen sind, wobei die wenigstens eine zweite Sensoreinheit (22) bezüglich der Aufstandsfläche (12) derart in wenigstens zwei Konfigurationen betreibbar ist, dass ihre Erfassung des Lastträgers (P1, P2) durch eine der Mehrzahl von Ausnehmungen (20) erfolgt.

5. Schnittstelleneinheit (10) nach Anspruch 4,
wobei die Mehrzahl von Ausnehmungen (20) als Schlitze ausgebildet sind, insbesondere als parallel zueinander verlaufende Schlitze.

6. Schnittstelleneinheit nach einem der vorhergehenden Ansprüche,
wobei die wenigstens eine zweite Sensoreinheit (22) derart angeordnet ist, dass sich ihr Erfassungsbereich schräg nach oben erstreckt

7. Schnittstelleneinheit (10) nach einem der vorhergehenden Ansprüche, umfassend wenigstens zwei zweite Sensoreinheiten (22) und wenigstens zwei Gruppen (20a, 20b) von Ausnehmungen (20), wobei jeder der Gruppen (20a, 20b) wenigstens eine der zweiten Sensoreinheiten (20) zugeordnet ist und die Gruppen (20a, 20b) vorzugsweise symmetrisch bezüglich der Längsachse (L) und/oder Breitenachse (B) der Schnittstelleneinheit (10) oder eines Mittelpunkts der Aufstandsfläche (12) angeordnet sind.

8. Schnittstelleneinheit (10) nach einem der vorhergehenden Ansprüche, umfassend wenigstens zwei erste Sensoreinheiten (14) und wenigstens zwei Gruppen von Anbringungspositionen (16a), wobei die Gruppen von Anbringungspositionen (16a) vorzugsweise symmetrisch bezüglich der Längsachse (L) und/oder Breitenachse (B) der Schnittstelleneinheit (10) oder eines Mittelpunkts der Aufstandsfläche (12) angeordnet sind.

9. Schnittstelleneinheit (10) nach einem der vorhergehenden Ansprüche, wobei die Anbringungspositionen (16a) als Anschraubpunkte ausgeführt sind, welche ein Eischrauben der Anschlagselemente (16) ermöglichen.

10. Schnittstelleneinheit (10) nach einem der vorhergehenden Ansprüche, wobei die wenigstens eine erste Sensoreinheit (14) und/oder die wenigstens eine zweite Sensoreinheit (22) als Abstandssensor oder Lichtschranke ausgeführt ist.

11. Schnittstelleneinheit (10) nach einem der vorhergehenden Ansprüche, wobei die Aufstandsfläche (12) an ihrer Oberseite mit einem Belag zur Erhöhung der Reibung versehen ist, insbesondere einem Grip-Tape.

12. Schnittstelleneinheit (10) nach einem der vorhergehenden Ansprüche, ferner umfassend wenigstens ein weiteres Anschlagselement (18), welchem keine Sensoreinheit zugeordnet ist.

13. Unterfahr-Shuttle, umfassend eine an seiner Oberseite angebrachte Schnittstelleneinheit (10) nach einem der vorhergehenden Ansprüche.

14. Unterfahr-Shuttle nach dem vorhergehenden Anspruch,
wobei eine zentrale Steuereinheit des Unterfahr-Shuttles mit den ersten und zweiten Sensoreinheiten (14, 22) der Schnittstelleneinheit (10) betriebsmäßig gekoppelt ist.
